# EUROPEAN PATENT SPECIFICATION

(11) **EP 4 401 219 B1**
(45) Date of publication and mention of the grant of the patent: **11.11.2026**
(21) Application number: 22907797.9
(22) Date of filing: 02.12.2022
(51) Int. Cl.: H01M 50/242, H01M 50/588, H01M 50/59, H01M 50/507, H01M 50/211

(54) **BATTERY MODULE FOR BATTERY BREAKAGE PREVENTION**
BATTERIEMODUL ZUR VERHINDERUNG VON BATTERIERUPTUR
MODULE DE BATTERIE POUR EMPÊCHER UNE RUPTURE DE BATTERIE

(30) Priority: 17.12.2021 KR 20210182156
(43) Date of publication of application: 17.07.2024
(73) Proprietor: LG Energy Solution, Ltd., Seoul 07335 (KR)
(72) Inventor: PARK, Jeong Hoon, Daejeon 34122 (KR); PARK, Jun Kyu, Daejeon 34122 (KR); SIN, Je Hwan, Daejeon 34122 (KR); CHOI, Jung Woo, Daejeon 34122 (KR)
(74) Representative: Plasseraud IP
(86) International application number: PCT/KR2022/019517
(87) International publication number: WO 2023/113328

(56) References cited:
- KR-A- 20140 015 846
- KR-A- 20190 069 132
- KR-A- 20200 080 079
- KR-A- 20210 112 918
- KR-B1- 101 696 913
- KR-B1- 102 152 886
- US-A1- 2021 336 287

## Description

### TECHNICAL FIELD

The present invention relates to a battery module for breakage prevention, and more particularly, to a battery module capable of preventing secondary battery breakage caused by swelling in advance.

### BACKGROUND ART

As development for alternative energy is essentially required for reasons such as environmental pollution or oil depletion, research on and development for power generation technologies based on energy sources such as solar heat, water power, wind power, ocean energy, and biomass energy, are carried out. In particular, researches on secondary batteries that can be repeatedly charged are actively carried out, and development is carried out on various aspects such as the materials, efficiency, structures, stability, and systems of the secondary batteries.

Secondary batteries in various types such as a pouch type, a prismatic type or a cylindrical type, are applied to electronic systems such as vehicles, mobile phones and notebook computers. A battery pack, which is a set of battery modules appropriately designed for each of the types, is mounted and utilized in an electronic system.

As the plurality of secondary batteries are used in the electronic system for a long time, users and developers have growing perceptions of stability, and there is an increasing demand for stability management not only during manufacture of the secondary batteries, but also during utilization thereof.
KR 2020 0080079 A discloses a battery module that minimizes damage to internal configurations generated in an assembly process. US 2021/336287 A discloses a battery module including a first module and a second module of battery cells stacked, a bus bar frame assembly and a pair of foldable side plates.

According to the related art, however, a swelling phenomenon in which the secondary batteries swell may occur because of failing to completely remove gas in the secondary batteries during the manufacture or evaporation of an electrolyte in the secondary batteries during the utilization of the secondary batteries. The swelling may also occur even when the secondary batteries are maintained in an overcharge or overdischarge state for a long time, are impacted, or become old. When the swelling is neglected, there is a risk of breakage of the secondary batteries or an occurrence of a fire or explosion in the battery modules because of the breakage.

### DISCLOSURE OF THE INVENTION

### TECHNICAL PROBLEM

An object to be solved by the present invention is to provide a battery module having an adaptive structure capable of securing an extra space so that breakage of secondary batteries does not occur because of a battery module structure when swelling occurs in the plurality of secondary batteries mounted in the battery module.

### TECHNICAL SOLUTION

The invention is set out in the appended set of claims.

### ADVANTAGEOUS EFFECTS

According to the present invention, even when the volume of the secondary battery is increased because of the swelling, the extra space is secured in the battery module to prevent the breakage of the secondary battery.

According to the present invention, the structure of the battery module also adaptively changes to cope with the change in the volume of the secondary battery according to the swelling, thereby preventing the breakage of the secondary battery.

According to the present invention, as the breakage of the secondary battery is prevented, the risk of the occurrence of the fire or the explosion in the battery module is reduced.

### BRIEF DESCRIPTION OF THE DRAWINGS

FIG. 1 is a view illustrating one aspect of a battery module according to an embodiment of the present invention.
FIG. 2 is a view illustrating another aspect of a battery module according to an embodiment of the present invention.
FIG. 3 is a view illustrating a portion of a combinational relationship of a battery module according to an embodiment of the present invention.
FIG. 4 is a view schematically illustrating a portion of a combinational relationship of a battery module according to another embodiment of the present invention.
FIG. 5 is a view illustrating a principle of structural change during swelling of a battery module according to another embodiment of the present invention.
FIG. 6 is a view illustrating a coupling shaft of a battery module according to embodiments of the present invention.
FIG. 7 is a view illustrating a portion of a combinational relationship of a battery module according to another embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

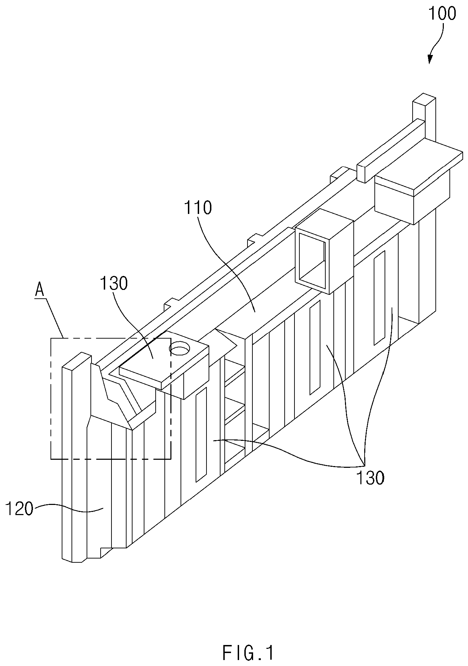

FIG. 1 is a view illustrating one aspect of a battery module 100 according to an embodiment of the present invention.

The battery module 100 includes an accommodation part 101. For example, the accommodation part 101 accommodates a plurality of batteries 200, and the plurality of batteries 200 is mounted in an inner space of the accommodation part 101. The plurality of batteries 200 may be secondary batteries.

The battery module 100 includes a plurality of frames 110 and 120.

The plurality of frames 110 and 120 includes a first frame 110. For example, the first frame 110 covers an upper portion of the accommodation part 101.

The plurality of frames 110 and 120 includes a second frame 120. For example, the second frame 120 covers a lateral portion of the accommodation part 101.

The first frame 110 and the second frame 120 are formed in a shape surrounding the accommodation part 101. For example, the first frame 110 covers the upper portion of the accommodation part 101 and the second frame 120 covers the lateral portion of the accommodation part 101, thereby surrounding the accommodation part 101.

The first frame 110 is coupled to the second frame 120.

A busbar 130 is disposed on the first frame 110. For example, as the busbar 130 is disposed on the first frame 110, the first frame 110 supports the busbar 130. The busbar 130 electrically connects the battery module 100 and the outside to each other.

The accommodation part 101, the first frame 110, and the second frame 120 forms a busbar frame. The busbar frame includes the busbar 130.

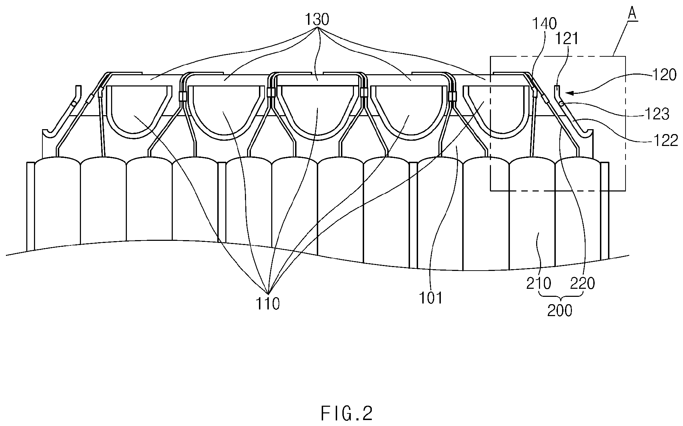

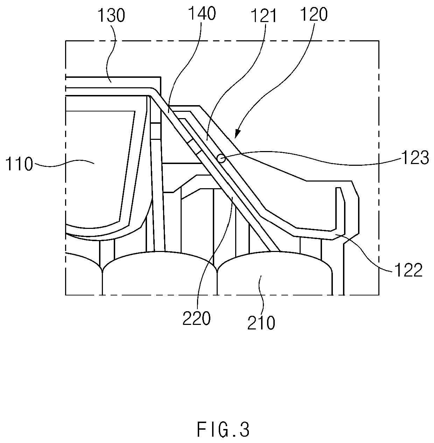

FIG. 2 illustrates another aspect of a battery module 100 according to an embodiment of the present invention. FIG. 3 illustrates a portion (a region A) of a combinational relationship of the battery module 100 according to an embodiment of the present invention.

A plurality of batteries 200 is mounted in an accommodation part 101 of the battery module 100.

The plurality of batteries 200 each includes a battery body 210 and a battery terrace 220. For example, the battery body 210 at least includes an electrode assembly in which a negative electrode and a positive electrode are stacked alternately with a separator therebetween. The battery terrace 220 is electrically connect the battery body 210 (or the electrode assembly included in the battery body 210) and the outside to each other.

The accommodation part 101 has an upper portion covered by a first frame 110, and a lateral portion covered by a second frame 120. A busbar 130 is disposed on the first frame 110. The busbar 130 is connected to a lead 140. The busbar 130 is electrically connected to the batteries 200 through the lead 140. For example, the busbar 130 is electrically connected to the lead 140, and the lead 140 is electrically connected to the battery terrace 220. Accordingly, the busbar 130 is electrically connected to the batteries 200.

The lead 140 and the battery terrace 220, through which the busbar 130 and the plurality of batteries 200 are electrically connected to each other, are referred to as a connection part. For example, the lead 140 and the battery terrace 220 form the connection part, and the busbar 130 and the plurality of batteries 200 are electrically connected to each other through the connection part.

The first frame 110 includes a connection space. For example, the lead 140 electrically connects the busbar 130 and the plurality of batteries 200 to each other through the connection space formed in the first frame 110.

A connection space is provided also between the first frame 110 and the second frame 120. For example, the lead 140 electrically connects the busbar 130 and the plurality of batteries 200 to each other through the connection space provided between the first frame 110 and the second frame 120.

The first frame 110 covers the upper portion of the accommodation part 101, and the second frame 120 covers the lateral portion of the accommodation part 101.

The outermost battery of the plurality of batteries 200 mounted in the accommodation part 101, which is disposed at the outermost side, is disposed to be adjacent to the second frame 120.

The first frame 110 is coupled to the second frame 120. For example, the first frame 110 has an edge coupled to the second frame 120.

A combinational relationship between the first frame 110 and the second frame 120 will be described in more detail with reference to the region A.

The second frame 120 includes a first member 121. For example, the first member 121 is coupled to the first frame 110.

The second frame 120 includes a second member 122. For example, the second member 122 is coupled to the first member 121 so as to be rotatable with respect to the first member 121.

The second frame 120 includes a coupling shaft 123. For example, the second member 122 rotates with respect to the first member 121 by the coupling shaft 123.

The accommodation part 101, the first frame 110, and the second frame 120 forms a busbar frame. The busbar frame includes the busbar 130.

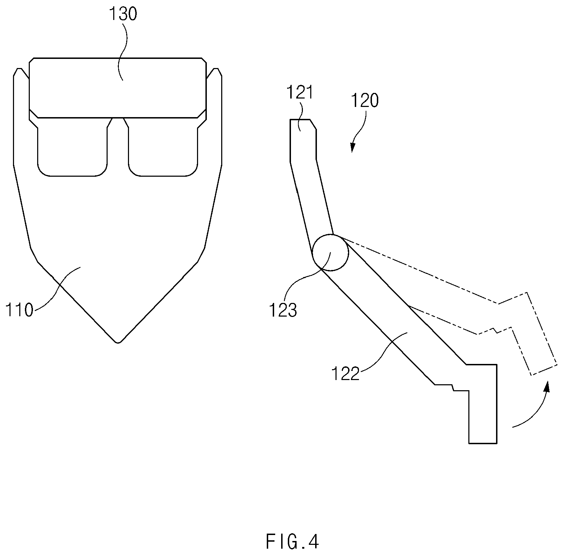

FIG. 4 schematically illustrates a portion of a combinational relationship of a battery module according to another embodiment of the present invention. In order to easily explain a position relationship between a first frame 110 and a second frame 120, other components are omitted in FIG. 4.

The first frame 110 is coupled to the second frame 120.

The second frame 120 includes a first member 121, a second member 122, and a coupling shaft 123.

The first member 121 is coupled to the first frame 110 and fixed to the first frame 110. For example, the first member 121 is coupled and fixed to an edge of the first frame 110.

The first member 121 is coupled to the second member 122. For example, the second member 122 is coupled to the first member 121 so as to be rotatable with respect to the first member 121.

The second member 122 rotates based on the first member 121 in a direction in which external force is received. For example, when force is applied to the second member 122 from the outside, the second member 122 rotates based on the first member 121 in a direction in which the force is applied.

The first member 121 and the second member 122 are coupled to each other through the coupling shaft 123. For example, the coupling shaft 123 allows the second member 122 to be rotatably coupled to the first member 121.

The second member 122 rotates around the coupling shaft 123 as a rotary shaft in the direction in which the external force is received.

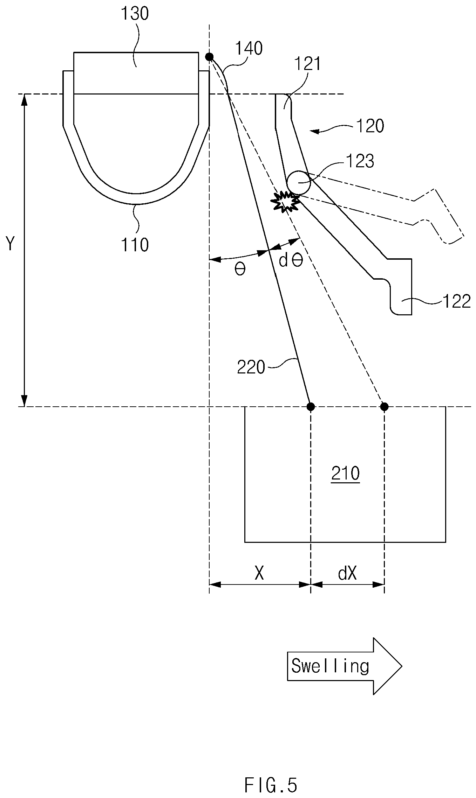

FIG. 5 is a view illustrating a principle of structural change during swelling of a battery module according to another embodiment of the present invention.

In a plurality of batteries 200, swelling occurs when gas in the secondary batteries is not completely removed during manufacture or an electrolyte in the secondary batteries is evaporated during utilization of the secondary batteries. When the swelling occurs in the plurality of batteries 200, the volume of plurality of batteries 200 is increased, and when the volume is increased to a predetermined volume or greater, a position or load of each of other components of a battery module 100 is affected.

The plurality of batteries 200 each includes a battery body 210 and a battery terrace 220. For example, the battery body 210 has a shape in which an electrode assembly is included in a pouch. The battery terrace 220 electrically connects the battery body 210 and the outside to each other.

A busbar 130 is disposed on a first frame 110.

The busbar 130 is connected to a lead 140. For example, the lead 140 electrically connects the busbar 130 and the plurality of batteries 200 to each other.

The lead 140 is connected to the battery terrace 220. For example, as the lead 140 and the battery terrace 220 are electrically connected to each other, the busbar 130 and the plurality of batteries 200 is electrically connected to each other.

The lead 140 and the battery terrace 220 form a connection part. For example, the connection part is a part that applies force to a second frame 120 when the volume of the battery body 210 is increased to a predetermined volume or greater according to the swelling.

When the swelling phenomenon occurs, the battery body 210 is deformed (or increase in volume) while expanding. For example, the battery body 210 before the swelling has a shape in which the battery body 210 is spaced a fixed distance Y from the busbar 130 in a vertical direction and a center of the battery body 210 is spaced a fixed distance X from one end thereof. The battery body 210 before the swelling is in a state in which the one end and the center of the battery body 210 form a fixed angle θ based on the specific busbar 130.

When the swelling occurs and the battery body 210 expands, the battery body 210 is deformed so that the center of the battery body 210 is far away from the one end by a specific distance dX. In this case, the battery body 210 is in a state in which the one end and the center of the battery body 210 form a specific angle θ-dθ based on the specific busbar 130.

When the volume of the battery body 210 mounted in an accommodation part 101 is increased to the predetermined volume or greater and the battery body 210 is deformed so that the center of the battery body 210 is far away from the one end by the specific distance dX, the connection part moves in a swelling direction and apply the force to the second frame 120. For example, at least one of a lead 140 or a battery terrace 220 applies the force to the second frame 120.

When the at least one of the lead 140 or the battery terrace 220, which forms the connection part, applies the force to the second frame 120, the first member 121 fixed and coupled to the first frame 110 does not move.

When the at least one of the lead 140 or the battery terrace 220, which forms the connection part, applies the force to the second frame 120, the second frame 120 rotates to the first member 121 in a direction in which the force is applied.

As described above, even when the volume of the batteries 200 is increased because of the swelling, the structure of the battery module also adaptively changes to cope with the volume change in battery module 100. Accordingly, an extra space is secured to prevent the breakage of the secondary batteries.

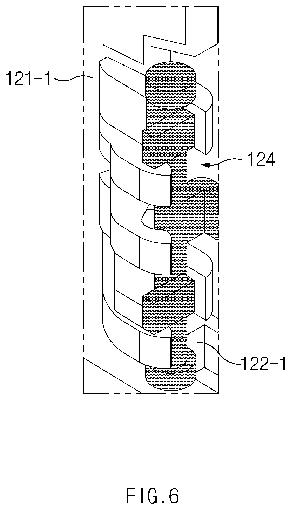

FIG. 6 illustrates a coupling shaft of a battery module according to embodiments of the present invention.

A first member 121 is coupled to a second member 122. For example, the second member 122 is pin-hook-coupled to the first member 121. The first member 121 and the second member 122 are pin-hook-coupled to each other and form a coupling shaft 123.

The first member 121 includes a first coupling part 121-1. For example, the first member 121 has one end including the first coupling part 121-1 to which the second member 122 is coupled.

The second member 122 includes a second coupling part 122-1. For example, the second member 122 has one end including the second coupling part 122-1 formed to be coupled to the first member 121.

The first coupling part 121-1 is formed so that the second coupling part 122-1 is pin-hook-coupled thereto. For example, the first coupling part 121-1 has an insertion space into which the second coupling part 122-1 is inserted (or pin-inserted). The second coupling part 122-1 is inserted into the insertion space formed in the first coupling part 121-1, and the second coupling part 122-1 is hook-coupled to a hooking part that forms an outer appearance of the insertion space of the first coupling part 121-1.

The second coupling part 122-1 includes a protrusion formed to be hooked with the hooking part of the first coupling part 121-1. For example, the protrusion of the second coupling part 122-1 is hooked with and hook-coupled to the hooking part of the first coupling part 121-1.

The second coupling part 122-1 rotates within the insertion space of the first coupling part 121-1. For example, the second coupling part 122-1 rotates in a state in which the second coupling part 122-1 is inserted into and hook-coupled to the insertion space of the first coupling part 121-1.

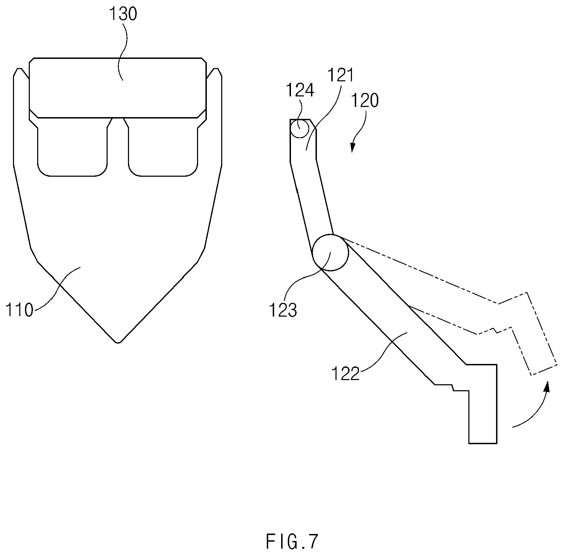

FIG. 7 illustrates a portion of a combinational relationship of a battery module according to another embodiment of the present invention.

A first member 121 further includes a frame coupling shaft 124 in order to further secure an extra space in the battery module.

The frame coupling shaft 124 couples a first frame 110 and a second frame 120 to each other, and is a coupling shaft that allows the second frame 120 to be rotatable with respect to the first frame 110.

The frame coupling shaft 124 is formed in the first member 121 of the second frame 120. For example, the frame coupling shaft 124 is formed at the other end of the first member 121, at which the first member 121 is coupled to the first frame 110.

When the first member 121 further includes the frame coupling shaft 124, the first member 121 is rotatable with respect to the first frame 110. For example, when a connection part applies force to the second frame 120, not only a second member 122 but also the first member 121 rotates with respect to the first frame 110. Specifically, the second member 122 is rotatable with respect to the first member 121 or the first frame 110, and the first member 121 is rotatable with respect to the first frame 110.

The description of the coupling shaft 123 is applied to the specific structure of the frame coupling shaft 124.

As described above, according to the embodiments of the present invention, the extra space is secured according to the structure that adaptively changes even when the volume of the secondary battery is increased because of the swelling. Accordingly, the breakage of the secondary battery is prevented, and the risk of the occurrence of the fire or the explosion in the battery module is reduced.

### [Description of the Symbols]

100: Battery module
101: Accommodation part
110: First frame
120: Second frame
121: First member
121-1: First coupling part
122: Second member
122-1: Second coupling part
123: Coupling shaft
124: Frame coupling shaft
130: Busbar
140: Lead
200: Battery
210: Battery body
220: Battery terrace

## Claims

1. A battery module (100) comprising:
a plurality of batteries (200), each of the plurality of batteries (200) comprising a battery body (210) and a battery terrace (220);
an accommodation part (101) configured to accommodate the plurality of batteries (200);
a first frame (110) configured to cover an upper portion of the accommodation part (101) and support a busbar (130) electrically connected to the battery terrace (220) through a lead (140); and
a second frame (120) configured to cover a lateral portion of the accommodation part (101) and coupled to the first frame(110),
wherein the second frame (120) comprises:
a first member (121) coupled to the first frame(110); and
a second member (122) coupled to the first member (121) so as to be rotatable with respect to the first member (121) in a direction in which the battery terrace (220) or the lead (140) of a first battery (200) of the plurality of batteries applies force according to a change in volume of the plurality of batteries.

2. The battery module (100) of claim 1, further comprising a coupling shaft (123) configured to allow the second member (122) to be rotatable with respect to the first member (121).

3. The battery module (100) of claim 2, wherein the lead (140) connects the busbar (130) and the first battery (200) to each other through a connection space provided between the first frame (110) and the second frame (120).

4. The battery module (100) of claim 1, wherein when a volume of the first battery (200) is increased above a predetermined volume, the battery terrace (220) or the lead (140) is in contact with the second frame (120) to apply the force to the second frame (120) and thus, the second member (122) rotates with respect to the first member (121) in a direction in which the force is applied.

5. The battery module (100) of claim 1, wherein an outermost battery of the plurality of batteries (200), which is disposed at an outermost side the plurality of batteries (200), is disposed to be adjacent to the second frame (120).

6. The battery module (100) of claim 1, wherein the first member (121) is coupled to the first frame (110) so as to be rotatable with respect to the first frame (110) in the direction in which the battery terrace (220) or the lead (140) of the first battery applies the force.

7. A module frame comprising:
an accommodation part (101) configured to accommodate a plurality of batteries (200);
a first frame (110) configured to cover an upper portion of the accommodation part (101) and support a busbar (130) from a lower side; and
a second frame (120) configured to cover a lateral portion of the accommodation part (101) and coupled to the first frame(110),
wherein the second frame (120) comprises:
a first member (121) coupled to the first frame(110); and
a second member (122) coupled to the first member (121) so as to be rotatable with respect to the first member (121) in a direction in which an external force is received.

8. The module frame of claim 7, wherein the first member (121) is coupled and fixed to the first frame (110).

9. The module frame of claim 7, wherein the first member (121) is coupled to the first frame (110) so as to be rotatable with respect to the first frame (110) in the direction in which the external force is received.

10. The module frame of claim 7, wherein the second member (122) is pin-hook-coupled to the first member (121).

## Patentansprüche

1. Batteriemodul (100), umfassend:
• eine Vielzahl von Batterien (200), wobei jede der Vielzahl von Batterien (200) einen Batteriekörper (210) und eine Batterieterrasse (220) umfasst;
• ein Aufnahmeteil (101), das so konfiguriert ist, dass es die Vielzahl von Batterien (200) aufnimmt;
• einen ersten Rahmen (110), der so konfiguriert ist, dass er einen oberen Abschnitt des Aufnahmeteils (101) abdeckt und eine Sammelschiene (130) trägt, die über eine Zuleitung (140) elektrisch mit der Batterieterrasse (220) verbunden ist; und
• einen zweiten Rahmen (120), der so konfiguriert ist, dass er einen seitlichen Abschnitt des Aufnahmeteils (101) abdeckt und mit dem ersten Rahmen (110) gekoppelt ist,
wobei der zweite Rahmen (120) umfasst:
• ein erstes Element (121), das mit dem ersten Rahmen (110) gekoppelt ist; und
• ein zweites Element (122), das mit dem ersten Element (121) so gekoppelt ist, dass es in Bezug auf das erste Element (121) in einer Richtung drehbar ist, in der die Batterieterrasse (220) oder die Zuleitung (140) einer ersten Batterie (200) der Vielzahl von Batterien eine Kraft entsprechend einer Volumenänderung der Vielzahl von Batterien ausübt.

2. Batteriemodul (100) nach Anspruch 1, ferner umfassend eine Kopplungswelle (123), die so konfiguriert ist, dass sie es dem zweiten Element (122) ermöglicht, in Bezug auf das erste Element (121) drehbar zu sein.

3. Batteriemodul (100) nach Anspruch 2, wobei die Zuleitung (140) die Sammelschiene (130) und die erste Batterie (200) miteinander durch einen Verbindungsraum verbindet, der zwischen dem ersten Rahmen (110) und dem zweiten Rahmen (120) vorgesehen ist.

4. Batteriemodul (100) nach Anspruch 1, wobei, wenn ein Volumen der ersten Batterie (200) über ein vorbestimmtes Volumen ansteigt, die Batterieterrasse (220) oder die Zuleitung (140) mit dem zweiten Rahmen (120) in Kontakt steht, um die Kraft auf den zweiten Rahmen (120) auszuüben, und sich somit das zweite Element (122) in Bezug auf das erste Element (121) in einer Richtung dreht, in der die Kraft ausgeübt wird.

5. Batteriemodul (100) nach Anspruch 1, wobei eine äußerste Batterie der Vielzahl von Batterien (200), die an einer äußersten Seite der Vielzahl von Batterien (200) angeordnet ist, so angeordnet ist, dass sie an den zweiten Rahmen (120) angrenzt.

6. Batteriemodul (100) nach Anspruch 1, wobei das erste Element (121) mit dem ersten Rahmen (110) so gekoppelt ist, dass es in Bezug auf den ersten Rahmen (110) in der Richtung drehbar ist, in der die Batterieterrasse (220) oder die Zuleitung (140) der ersten Batterie die Kraft ausübt.

7. Modulrahmen, umfassend:
• ein Aufnahmeteil (101), das so konfiguriert ist, dass es eine Vielzahl von Batterien (200) aufnimmt;
• einen ersten Rahmen (110), der so konfiguriert ist, dass er einen oberen Abschnitt des Aufnahmeteils (101) abdeckt und eine Sammelschiene (130) von einer Unterseite her trägt; und
• einen zweiten Rahmen (120), der so konfiguriert ist, dass er einen seitlichen Abschnitt des Aufnahmeteils (101) abdeckt und mit dem ersten Rahmen (110) gekoppelt ist,
wobei der zweite Rahmen (120) umfasst:
• ein erstes Element (121), das mit dem ersten Rahmen (110) gekoppelt ist; und
• ein zweites Element (122), das mit dem ersten Element (121) so gekoppelt ist, dass es in Bezug auf das erste Element (121) in einer Richtung drehbar ist, in der eine externe Kraft aufgenommen wird.

8. Modulrahmen nach Anspruch 7, wobei das erste Element (121) mit dem ersten Rahmen (110) gekoppelt und daran befestigt ist.

9. Modulrahmen nach Anspruch 7, wobei das erste Element (121) mit dem ersten Rahmen (110) so gekoppelt ist, dass es in Bezug auf den ersten Rahmen (110) in der Richtung drehbar ist, in der die externe Kraft aufgenommen wird.

10. Modulrahmen nach Anspruch 7, wobei das zweite Element (122) mittels Stift und Haken mit dem ersten Element (121) gekoppelt ist.

## Revendications

1. Module de batterie (100) comprenant :
• une pluralité de batteries (200), chacune de la pluralité de batteries (200) comprenant un corps de batterie (210) et une terrasse de batterie (220) ;
• une partie de logement (101) configurée pour loger la pluralité de batteries (200) ;
• un premier châssis (110) configuré pour recouvrir une partie supérieure de la partie de logement (101) et supporter une barre omnibus (130) connectée électriquement à la terrasse de batterie (220) par l'intermédiaire d'un conducteur (140) ; et
• un second châssis (120) configuré pour recouvrir une partie latérale de la partie de logement (101) et couplé au premier châssis (110),
dans lequel le second châssis (120) comprend :
• un premier élément (121) couplé au premier châssis (110) ; et
• un second élément (122) couplé au premier élément (121) de manière à pouvoir tourner par rapport au premier élément (121) dans une direction dans laquelle la terrasse de batterie (220) ou le conducteur (140) d'une première batterie (200) de la pluralité de batteries applique une force en fonction d'un changement de volume de la pluralité de batteries.

2. Module de batterie (100) selon la revendication 1, comprenant en outre un arbre d'accouplement (123) configuré pour permettre au second élément (122) de pouvoir tourner par rapport au premier élément (121).

3. Module de batterie (100) selon la revendication 2, dans lequel le conducteur (140) connecte la barre omnibus (130) et la première batterie (200) l'une à l'autre à travers un espace de connexion prévu entre le premier châssis (110) et le second châssis (120).

4. Module de batterie (100) selon la revendication 1, dans lequel, lorsqu'un volume de la première batterie (200) augmente au-delà d'un volume prédéterminé, la terrasse de batterie (220) ou le conducteur (140) est en contact avec le second châssis (120) pour appliquer la force au second châssis (120) et, ainsi, le second élément (122) tourne par rapport au premier élément (121) dans une direction dans laquelle la force est appliquée.

5. Module de batterie (100) selon la revendication 1, dans lequel une batterie la plus externe de la pluralité de batteries (200), qui est disposée au niveau d'un côté le plus externe de la pluralité de batteries (200), est disposée de manière à être adjacente au second châssis (120).

6. Module de batterie (100) selon la revendication 1, dans lequel le premier élément (121) est couplé au premier châssis (110) de manière à pouvoir tourner par rapport au premier châssis (110) dans la direction dans laquelle la terrasse de batterie (220) ou le conducteur (140) de la première batterie applique la force.

7. Châssis de module comprenant :
• une partie de logement (101) configurée pour loger une pluralité de batteries (200) ;
• un premier châssis (110) configuré pour recouvrir une partie supérieure de la partie de logement (101) et supporter une barre omnibus (130) depuis un côté inférieur ; et
• un second châssis (120) configuré pour recouvrir une partie latérale de la partie de logement (101) et couplé au premier châssis (110),
dans lequel le second châssis (120) comprend :
• un premier élément (121) couplé au premier châssis (110) ; et
• un second élément (122) couplé au premier élément (121) de manière à pouvoir tourner par rapport au premier élément (121) dans une direction dans laquelle une force externe est reçue.

8. Châssis de module selon la revendication 7, dans lequel le premier élément (121) est couplé et fixé au premier châssis (110).

9. Châssis de module selon la revendication 7, dans lequel le premier élément (121) est couplé au premier châssis (110) de manière à pouvoir tourner par rapport au premier châssis (110) dans la direction dans laquelle la force externe est reçue.

10. Châssis de module selon la revendication 7, dans lequel le second élément (122) est couplé par goupille-crochet au premier élément (121).
